Europäisches Patentamt

European Patent Office

Office européen des brevets

(11) Numéro de publication : **0 423 050 B1**

# (12) FASCICULE DE BREVET EUROPEEN

(45) Date de publication du fascicule du brevet :
**14.12.94 Bulletin 94/50**

(51) Int. Cl.$^5$ : **H04B 1/66**

(21) Numéro de dépôt : **90460037.6**

(22) Date de dépôt : **12.10.90**

(54) **Dispositif de compression d'un signal audio-numérique transformé, à quantification adaptative sur critère psycho-auditif.**

(30) Priorité : **13.10.89 FR 8913649**

(43) Date de publication de la demande :
**17.04.91 Bulletin 91/16**

(45) Mention de la délivrance du brevet :
**14.12.94 Bulletin 94/50**

(84) Etats contractants désignés :
**DE GB IT NL**

(56) Documents cités :
**EP-A- 0 111 612**
**EP-A- 0 309 974**

(56) Documents cités :
**ICASP - 1989 INTERNATIONAL CONFERENCE ON ACOUSTICS, SPEECH, AND SIGNALPRO-CESSING, Glasgow, 23 - 26 mai 1989, pages 1981-1984, IEEE, New York, US; B. Bochow et al.: "Multiprocessor Implementation of an ATC Audio Codec"**
**IEEE JOURNAL ON SELECTED AREAS IN COMMUNICATIONS, vol. 6, no. 2, février 1988,pages 410-424, IEEE, New York, US; T. TANIGUCHI et al.: "ADPCM with amultiquan-tizer for speech coding"**

(73) Titulaire : **FRANCE TELECOM**
**6, Place d'Alleray**
**F-75015 Paris (FR)**

(72) Inventeur : **Mahieux, Yannick**
**Bourg Tonquédec**
**F-22140 Begard (FR)**

(74) Mandataire : **Corlau, Vincent**
**c/o Cabinet Patrice Vidon,**
**Immeuble Germanium,**
**80 avenue des Buttes de Coesmes**
**F-35700 Rennes (FR)**

EP 0 423 050 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

Le domaine de l'invention est celui de la compression de signaux audio numériques. L'invention s'applique notamment à la transmission de signaux sonores sur canaux numériques, ainsi qu'aux dispositifs de stockage de signaux sonores numériques.

Plus précisément, l'invention concerne un dispositif d'allocation de bits, permettant une quantification adaptative d'un signal audio-numérique, après que celui-ci a été transformé dans le domaine fréquentiel et découpé en bandes de fréquence.

L'invention peut par exemple être mise en oeuvre dans les systèmes de diffusion directe par satellite, tels que ceux développés dans le projet européen DAB (Digital Audio Broadcasting/Diffusion Audio Numérique), ou encore dans des systèmes de diffusion par RNIS, et de distribution haute-fidélité. Elle s'applique également notamment aux dispositifs de stockage, tels que les disques numériques.

Les signaux audio numériques présentent de nombreux avantages par rapport aux signaux analogiques, notamment en ce qui concerne la fidélité du son, la conservation de la qualité initiale et la souplesse d'utilisation. Toutefois, le débit résultant de la conversion en numérique des signaux audio est très important, en particulier pour les signaux haute qualité, dont la largeur de bande est supérieure à 15 kHz.

Il est alors nécessaire de faire appel à des techniques de réduction de débit.

De façon connue et largement répandue, les techniques utilisées font appel à des algorithmes de transformation mathématique du signal audio-numérique source. Les techniques de codage par transformée ont été largement appliquées aux domaines de l'image, ou de la parole; elles sont depuis peu également appliquées au traitement des signaux audio, principalement musicaux.

Dans les codeurs existants mettant en oeuvre ces techniques, le signal subit d'abord une découpe en blocs temporels, puis est soumis à une transformation temps/fréquence. Ce sont les coefficients des blocs transformés qui sont codés et transmis. Au décodeur, une transformation inverse délivre le signal décodé et reconstruit.

L'application de la transformation mathématique accomplit une concentration de l'énergie du signal source sur les coefficients les plus importants, et permet ainsi une réduction du débit en contrôlant et minimisant la dégradation auditive, notamment par élimination sélective de certains des coefficients transformés. En effet, le fait de travailler dans le domaine fréquentiel favorise la prise en compte des propriétés perceptuelles et psycho-auditives qui sont principalement liées à la nature spectrale du son. La prise en compte de critères psycho-auditifs repose, dans la plupart des dispositifs existants, sur l'analyse de ZWICKER ("Psychoacoustique" ; Ed. Masson 1981), fondée sur le concept de masquage des composantes spectrales inaudibles.

Les dispositifs connus réalisés sur ces principes diffèrent entre eux sur certains partis pris de conception :
- la transmission ou non d'une information auxiliaire à l'information principale ;
- l'utilisation ou non de techniques remédiant à l'effet des perturbations de transmission ;
- les techniques de prise en compte des critères psycho-auditifs pour effectuer la réduction de débit et la localisation de leur mise en oeuvre dans les chaînes de codage et de décodage du signal ;
- les modes de codage de compression des informations principales, et, le cas échéant, des informations auxiliaires transmises.

Ainsi, dans un premier dispositif connu de ce type, tel que décrit dans le document de brevet français FR 89 06194, "Procédé et installation à codage des signaux sonores", au nom des déposants, on met en oeuvre successivement le découpage du signal sonore en blocs d'échantillons, la transformation temps-fréquence et un codage prédictif et adaptatif des coefficients les plus significatifs de chaque bloc, utilisant la stationnarité du signal. Dans ce dispositif, l'information auxiliaire est transmise lors des blocs de transition, qui rendent impossible la prise en compte d'une corrélation interblocs. Dans toutes les autres situations, cette information auxiliaire sert seulement à piloter le module d'allocation de bits alimentant le quantificateur de signal principal. Ce dispositif permet une diminution du débit. Toutefois, il entraîne une dégradation en chaîne de la reconstitution des blocs reçus, lorsqu'une erreur se produit, du fait que cette erreur se répercute sur le bloc suivant, et ainsi de suite, via le rebouclage d'élaboration de l'information auxiliaire pilotant l'allocateur de bits et le quantificateur du décodeur.

On connaît également des dispositifs dans lesquels une information auxiliaire est transmise pour chaque bloc, par codage adaptatif. Un tel dispositif est par exemple décrit dans l'article de BOCHOW "Multiprocessor Implementation of an ATC Audio Codec" (Implantation multiprocesseur d'un codeur/décodeur audio à codage adaptatif par transformation) (Actes du Congrès ICASSP 1989 ; Glasgow). Un inconvénient de ce dispositif est que le codage en continu de l'information auxiliaire réclame un débit élevé, au détriment du débit alloué à l'information principale.

Le document de JOHNSTON, "Transform Coding of Audio Signals Using Perceptual Noise Criteria" (Codage par transformation de signaux utilisant des critères psychoacoustiques) (IEEE Journal on Selected Areas

2

in Communication, Vol.6, N°2, Février 1988; pp.314-323), présente un dispositif de réduction de débit par quantification adaptative comportant une mise en oeuvre des seuils de masquage selon l'analyse de ZWICKER, sous forme d'un algorithme de prédiction au niveau du quantificateur du signal principal. Cet algorithme vise à minimiser le rapport bruit/seuil de masquage. De même que dans le dispositif de BOCHOW, l'information auxiliaire est transmise en continu. Ce dispositif présente d'autre part un codage à longueur variable, ou codage de HUFFMAN en sortie du quantificateur, assez complexe à mettre en oeuvre.

L'invention a notamment pour but de pallier les inconvénients de ces différents dispositifs connus.

Plus précisément, l'objectif de l'invention est de fournir un dispositif de compression d'un signal audionumérique, en utilisant un dispositif d'allocation de bits disponibles pour la transmission ou le stockage du signal, pilotant des moyens de quantification adaptative du signal, afin de permettre une réduction importante du débit tout en conservant au maximum la qualité du signal de départ.

L'invention a également pour objectif de fournir un tel dispositif d'allocation de bits dont le principe de fonctionnement tienne compte de critères psychoauditifs.

Un autre objectif de l'invention est de minimiser les phénomènes de dégradation en chaîne à la reconstitution du signal lorsqu'une perturbation génératrice d'erreurs ou de brouillage se produit dans le canal de transmission.

Un objectif complémentaire de l'invention est de fournir, dans un des modes de réalisation avantageux de l'invention un principe de transmission conjointe d'informations principales et d'informations auxiliaires, en optimisant le débit des informations auxiliaires, puis des informations principales.

L'invention a également pour objectif de permettre l'utilisation d'un nombre de bits fixe pour le codage de chaque bloc d'informations.

Ces objectifs, ainsi que d'autres qui apparaîtront par la suite, sont atteints à l'aide d'un dispositif tel que défini par la revendication 1.

Cette élimination de composantes spectrales pour l'élaboration de l'information auxiliaire permet une optimisation a priori de l'opération de quantification.

Avantageusement, ledit dispositif comporte (de façon connue) des moyens de calcul du seuil de masquage de composantes spectrales sur critère psycho-auditif, pour l'optimisation de l'allocation des bits dans chacune desdites bandes.

De façon préférentielle, ledit critère psycho-auditif fonctionne selon le critère de masquage psycho-auditif de ZWICKER.

Selon une caractéristique importante de l'invention, lesdits moyens de quantification comportent au moins deux quantificateurs distincts et des moyens d'affectation sélective de l'un desdits quantificateurs à chacune desdites bandes du spectre dudit signal transformé en fonction du nombre de composantes conservées dans ladite bande, après ladite élimination des coefficients masqués.

Dans un mode de réalisation préférentiel de l'invention, ledit dispositif comprend des moyens de minimisation d'un rapport bruit de quantification/seuil de masquage dans chacune desdites bandes.

De façon avantageuse, ledit bruit de quantification est déterminé en fonction d'au moins une des trois informations appartenant au groupe comprenant:
- l'écart-type desdites composantes spectrales non éliminées dans ladite bande ;
- un facteur de performance dudit quantificateur sélectionné pour ladite bande ;
- une information d'étalement spectral de ladite bande.

Selon une autre caractéristique de l'invention, ladite information fournie par lesdits moyens d'élimination préalable de composantes spectrales est élaborée par des moyens de codage des longueurs de suites pour le codage des indices desdites composantes spectrales masquées.

Préférentiellement, lesdits moyens de codage des longueurs de suites utilisent un code à longueur variable du type des codes de HUFFMAN.

Selon une caractéristique avantageuse, lesdits moyens de codage des longueurs de suites délivrent un mot de code spécifique pour le codage des bandes de fréquence dont toutes lesdites composantes sont éliminées.

De façon avantageuse, lesdits moyens de codage des longueurs de suites sont activées par des moyens de sélection, en fonction d'une information de gain de débit apporté par ledit codage.

Selon une autre caractéristique importante de l'invention, ledit dispositif coopère avec des moyens de codage desdites informations auxiliaires correspondant à la description du spectre.

De cette façon, il est possible de transmettre en permanence une information auxiliaire, sans que cela ne nuise de façon importante au débit de l'information principale.

De façon préférentielle, lesdits moyens de codage comprennent des moyens de codage prédictif.

Ainsi, les risques de dégradation en chaîne sont supprimés en ce qui concerne l'information principale. Cela ne peut se produire, dans l'invention, que sur l'information auxiliaire.

Avantageusement, lesdits moyens de codage prédictif comprennent des moyens appartenant au groupe comprenant les moyens de conversion logarithmique, les moyens de codage MIC différentiel, et les moyens de codage par code à longueur variable, du type des codes de HUFFMAN.

Préférentiellement, lesdits moyens de codage comprennent également des moyens de codage sans mémoire interblocs, lesdits moyens de codage prédictif et lesdits moyens de codage sans mémoire étant sélectionnés selon un critère prédéterminé.

Avantageusement, ce critère prédéterminé est un critère de moindre débit et/ou un critère de minimisation de l'effet des erreurs de transmission.

Selon une caractéristique avantageuse de l'invention, au moins une des informations appartenant au groupe comprenant ladite information auxiliaire correspondant à la description du spectre, ladite information fournie par lesdits moyens d'élimination des composantes inaudibles et une information d'étalement spectral, est transmise ou stockée conjointement à chacun des blocs d'information principale.

Selon une autre caractéristique de l'invention, ledit signal numérique transformé est élaboré par des moyens de codage par transformation utilisant une transformée du type de la transformée en cosinus discrète modifiée de PRINCEN et BRADLEY.

De façon avantageuse, lesdits moyens de codage par transformation comportent des moyens de fenêtrage adouci du signal temporel faisant apparaître une symétrie dans ledit signal transformé.

Préférentiellement, lesdits moyens de fenêtrage utilisent une fenêtre définie par :

$$F(n) = \sqrt{2}.\sin(\pi(n + 0,5)/N) \qquad n = 0,....,N - 1$$

où N est le nombre d'échantillons de ladite fenêtre.

D'autres caractéristiques et avantages de l'invention apparaîtront à la lecture suivante d'un mode de réalisation préférentiel de l'invention, donné à titre illustratif et non limitatif, et des dessins annexés, dans lesquels :

- la figure 1 est le synoptique d'un dispositif de codage de signaux audionumériques comprenant un dispositif d'allocation de bits selon l'invention ;
- la figure 2 est le schéma fonctionnel du module d'élimination des raies masquées ;
- la figure 3 représente le schéma fonctionnel détaillé du module de calcul et de codage de l'information auxiliaire ;
- la figure 4 est le schéma fonctionnel du module de codage prédictif de l'information auxiliaire ;
- la figure 5 est un schéma illustrant le principe d'élimination des raies masquées d'après l'analyse de ZWICKER.
- la figure 6 présente le schéma fonctionnel du module de sélection d'un quantificateur parmi plusieurs ;
- la figure 7 est le schéma fonctionnel du dispositif d'allocation de bits à chaque bande.

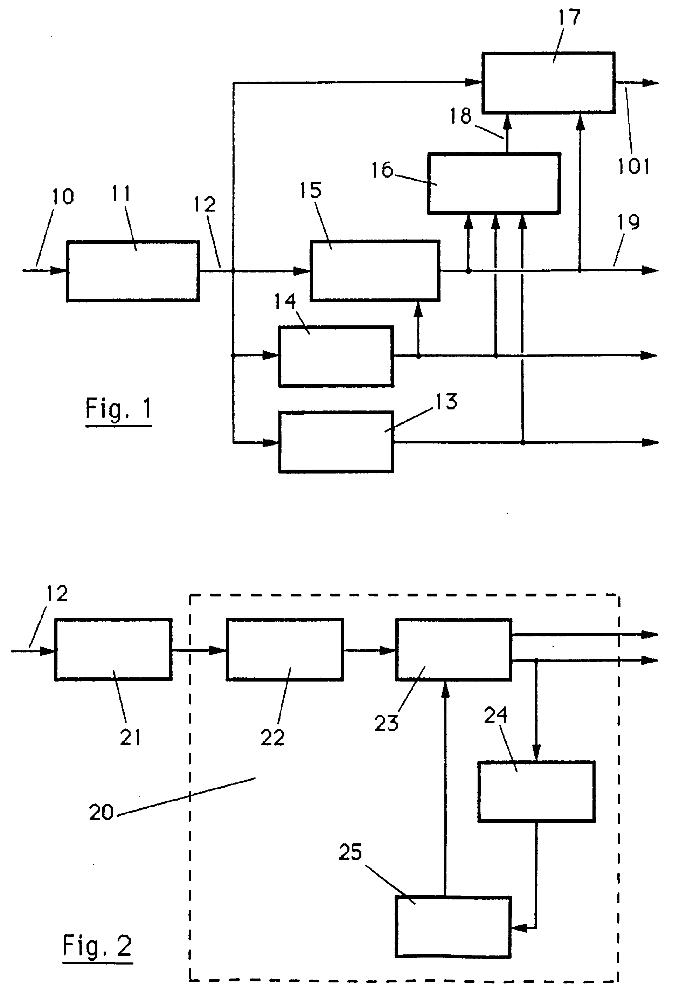

Le dispositif de la figure 1 permet le codage de données audio-numériques selon le procédé de l'invention. Le signal d'entrée x(n) 10, échantillonné à une fréquence supérieure ou égale à 32 kHz, est appliqué au module de transformation 11. La fréquence d'échantillonnage correspond à celle utilisée pour le son haute fidélité.

Dans un mode de réalisation préférentiel du module de transformation 11, on utilise avantageusement la transformée mise au point par PRINCEN et BRADLEY ("Adaptative Transform Coding incorporating Time Domain Aliasing Cancellation" (Codage adaptatif par transformation à annulation dans le domaine temporel des phénomènes dus au repliement du spectre) ; in Speech Communication ; Décembre 1987), encore appelée transformée en cosinus discrète modifiée (TCDM). Cette transformée correspond à une projection sur une base en cosinus. Les coefficients de transformée sont définis par :

$$y(m,k) = \sum_{n=0}^{N-1} x_m(n).h(N-1-n).\cos(2\pi(k+\tfrac{1}{2})(n+n_0)/N)$$

k = 0,...,N-1.
avec :
N : taille du bloc de transformée,
$n_0 = N/4 + \tfrac{1}{2}$ : terme de décalage,
h(n) : fenêtre de pondération des blocs,
m : numéro du bloc de transformée.

Son avantage principal est lié au fait qu'elle autorise l'emploi de fenêtres de pondération h(n) performantes sur le plan spectral réalisant ainsi une excellente séparation des canaux de transformée. La concentration d'énergie est alors plus forte qu'avec la transformée de Fourier discrète (TFD) associée à une fenêtre rectangulaire.

Avant d'être transformé, le bloc d'échantillons temporels est donc pondéré par une fenêtre h(n). On utilise une fenêtre "adoucie", par exemple une fenêtre de forme sinusoïdale, définie par : $h(n) = \sqrt{2} \sin(\pi(n+0,5)/N)$, n variant de 0 à N-1, N étant le nombre d'échantillons par blocs temporels. La TCDM utilisée fonctionne en parfaite synergie avec ce type de fenêtre adoucie. En effet, ce type de fenêtre permet d'obtenir, après transformation, N/2 coefficients indépendants, les N/2 autres coefficients étant identiques, au signe près. Au contraire, une fenêtre rectangulaire entraînerait un étalement spectral par rapport au signal d'origine. Du fait que sa mise en oeuvre réclame d'autre part un recouvrement interblocs valant 50 % de la taille des blocs, le nombre de coefficients transformés est identique au nombre d'échantillons d'origine du signal source à transmettre à chaque bloc. Ce chevauchement interblocs est nécessaire pour assurer la parfaite reconstruction du signal.

Les coefficients y(k) 12 sortant du module de transformation 11 sont ensuite présentés aux entrées des divers modules de codage 13,14,15,16,17.

Un premier bloc 14 réalise tout d'abord l'élimination des composantes spectrales inaudibles dans le signal transformé 12.

Cette opération d'élimination se base par exemple sur l'analyse de ZWICKER, comme détaillé plus loin. Cette analyse permet de distinguer dans un signal audio des raies masquées, correspondant à des fréquences inaudibles. Les coefficients de transformées correspondant à ces composantes inaudibles ne sont pas transmis.

La TCDM étant caractérisée par une bonne séparation en fréquence, le nombre de raies éliminées peut être important. Il en résulte une réduction significative du nombre de valeurs à transmettre. De plus, ces coefficients non transmis étant en général de niveau faible, les quantificateurs utilisés pour les coefficients transmis peuvent être optimisés en conséquence.

Le module d'élimination des raies masquées 14 est plus précisément décrit plus loin, en liaison avec la figure 2.

Les raies spectrales conservées fournies en sortie du module 14 servent d'entrée au module 15 de calcul et de codage de l'information auxiliaire. L'information auxiliaire générée par le module 15 est calculée par bandes de fréquence de largeurs inégales et peut être codée par deux modes différents. Si le signal est stationnaire, le codage a lieu par rapport aux blocs précédents (prise en compte de la corrélation inter-trames), sinon le bloc courant est un bloc de transition et le codage a lieu sans prise en compte de la mémoire inter-blocs.

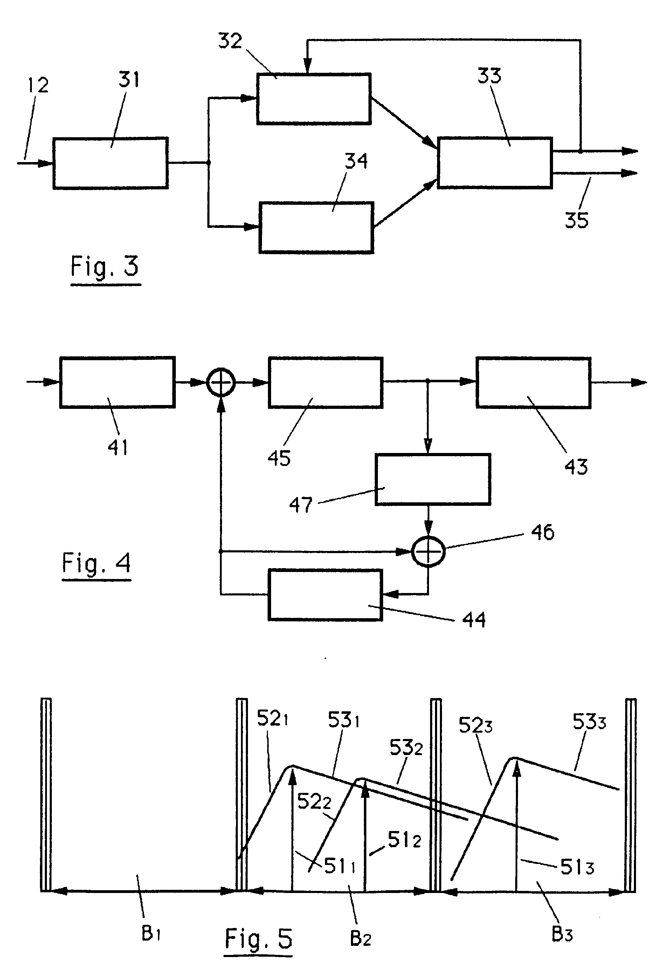

Ces moyens de codage sont décrits plus précisément par la suite, en liaison avec la figure 3.

Les sorties du module 14 d'élimination des raies masquées et du module 15 de calcul et de codage de l'information auxiliaire alimentent le module 16 d'allocation des bits pilotant le quantificateur 17. La sortie du bloc 16 d'allocation de bits fournit une information 18 du nombre de bits R disponible pour l'expression de chacun des coefficients y(k) du signal transformé 12. Cette allocation de bits est dynamique : elle varie d'un bloc au suivant. De plus, elle est conçue pour assurer le masquage du bruit de quantification.

Le module d'allocation des bits 16 a également comme entrée les valeurs de la fonction d'étalement spectral mesurée par bandes de fréquence fournie par un module 13 de calcul et de codage de l'étalement spectral, sur les coefficients du signal transformé 12. Ceci permet de caractériser la nature du spectre, et notamment s'il est fortement concentré ou non.

Le fonctionnement du module d'allocation des bits 16 est développé plus loin.

Enfin, il est procédé dans le module 17 à la quantification des coefficients y(k) du signal 12, d'après l'information 18 du nombre de bits R alloué. De plus, selon une caractéristique importante de l'invention, l'information 19 obtenue en sortie du codeur 15 de l'information auxiliaire ainsi que l'information d'élimination des raies masquées issue du module 14

permettent de choisir, pour le bloc courant, un quantificateur parmi plusieurs quantificateurs disponibles, comme on le verra ci-après.

Le décodage se fait de façon tout à fait symétrique au codage.

La figure 2 présente le schéma fonctionnel du module 14 d'élimination des raies masquées.

La fonction de ce module 14 est de discriminer les raies inaudibles du fait des phénomènes de masquage, afin que ne soit transmise que l'information perceptuellement utile.

Cette procédure est particulièrement avantageuse pour les sons à spectre large, riches en harmoniques. Un nombre important de coefficients est alors masqué. C'est justement ce type de signal qui réclame un débit plus fort, du fait de la quantité d'information à transmettre.

Ce dispositif comprend un module de détection des raies masquées. Cette détection porte sur le spectre réel et n'est effectuée qu'au codeur. Elle fait appel aux courbes de masquage fréquentiel, d'après l'analyse de ZWICKER. Comme illustré en figure 5, il apparaît que pour chaque raie 51 émise, les raies se trouvant sous une ligne 52 de - 25 dB par bande critique en amont de la raie et sous une ligne 53 de - 10 dB par bande critique en aval, sont inaudibles. Ces deux pentes correspondent respectivement aux masquages fréquentiels antérieur et postérieur.

Le spectre est partagé en 24 bandes critiques $B_1, B_2, B_3$ et multiplié par le facteur $a_0$ de transmission de l'oreille pour chacune desdites bandes.

Le calcul du seuil de masquage est séparé en masquage "intra-bande critique" et "inter-bandes critiques".

Le masquage intrabande correspond à l'effet global de masquage de toutes les raies $51_1, 51_2$ à l'intérieur d'une même bande $B_2$. Le calcul du seuil de masquage intra-bande est réalisé par sommation de la contribution de chaque coefficient $y(k)$ du signal transformé.

Si l'on considère la bande critique j, délimitée par $b_b(j)$, limite inférieure, et $b_h(j)$, borne supérieure, la contribution du coefficient $y(k)$ au seuil de masquage intrabande $s_{in}(i)$ est donnée par :

$$s_{in}{}^k(i) = \Theta.(y(k)^2.a_0(j))$$

avec $b_b(j) \leq i \leq k-3$ et $k+3 \leq i \leq b_h(j)$

où $\Theta$ est un décalage constant correspondant à - 30 dB.

Ainsi que l'on peut le constater, chaque coefficient $y(k)$ n'affecte pas le seuil de masquage des 4 coefficients les plus proches. Cette précaution est nécessaire pour éviter des mises à zéro intempestives pouvant se produire autour des pics du spectre.

Le seuil de masquage intra-bande est finalement obtenu par sommation des $s_{in}{}^k(i)$ :

$$s_{in}(i) = \sum_{i=b_b(j)}^{b_h(j)} s_{in}{}^k(i)$$

avec $b_b(j) \leq i \leq b_h(j)$ et j = 1,...,24.

Le masquage interbande résulte de la prise en compte, dans chaque bande $B_2$, de l'effet de masquage des bandes adjacentes. En fait, seul le masquage postérieur (celui des raies $51_3$ de la bande $B_3$) est considéré pour le calcul du seuil de masquage inter-bandes. Le masquage antérieur (bande $B_1$) est trop faible pour modifier sensiblement le nombre de raies masquées par bloc (-25 dB par bande critique au lieu de -10 dB).

La contribution $s_{out}{}^j(i)$ de chaque bande critique j au masquage des bandes suivantes (i>j) est calculé par :

$$s_{out}{}^j(i) = \Theta.( \sum_{k=b_b(j)}^{b_h(j)} y(k)^2.a_0(j)).(1/10)^{i-j}$$

i = j + 1,...,24

Le masquage inter-bandes total, pour la bande critique i, vaut :

$$s_{out}(i) = \sum_{j=1}^{i-1} s_{out}{}^j(i)$$

Finalement, pour le coefficient $y(i)$, de la bande critique j, le seuil de masquage final est obtenu par sommation :

$$s(i) = s_{in}(i) + s_{out}(j)$$

L'énergie du coefficient $y(i)$, multiplié par le facteur de transmission $a_0(j)$, est alors comparée au seuil de masquage ainsi défini. Si $a_0(j).y^2(i) < s(i)$, le coefficient $y(i)$ est supposé masqué.

6

Cette fonction est réalisée par le sous-module 21 de la figure 2. Cette figure détaille les sous-modules principaux constitutifs du module 14 d'élimination des raies masquées de la figure 1.

Avantageusement, la détection des raies masquées dans le sous-module 14 est suivie d'un codage des indices des raies masquées, réalisé par le bloc 20. Ce codage, nécessaire pour indiquer au décodeur les numéros des coefficients masqués, fait par exemple appel à la technique de codage des longueurs de suite ("Run Length Coding").

Soit $I_m(k)$, un bit valant 1 si le coefficient $y(k)$ est masqué. La série des $\{I_m(k), k=0,...,N/2\}$ présente des suites ininterrompues de 0 et de 1, plus ou moins longues formées dans un sous-module 22. C'est la longueur des suites qui est transmise à l'aide d'un code à longueur variable 23. Si de nombreuses raies de même état se suivent sans discontinuité, alors le débit à allouer à cette information auxiliaire peut être faible.

Le codage à longueur variable du sous-module 23 est assuré avantageusement par un code de Huffman calculé à partir d'une densité de probabilité expérimentale.

Le codage des suites ne débute qu'à partir de la première raie masquée. Le numéro de celle-ci est transmis sur 9 bits.

Au codeur, le "Run Length Coding" consiste simplement à rechercher toutes les suites de 0 et de 1 et à leur associer le mot de code de Huffman correspondant.

La longueur des suites est limitée à des valeurs maximales : 64 coefficients pour les suites de 0 et 128 coefficients pour les suites de 1. Si ces limites sont dépassées, une suite de longueur nulle et d'état inverse, est transmise. A cette suite de longueur nulle est associée un mot de code de Huffman, calculé lui aussi (hors ligne) d'après l'occurence de la suite.

Au décodeur, après réception du numéro de la première raie masquée, il suffit de procéder au décodage des codes de Huffman. Les suites de codes de longueurs de 0 et de 1 permet de reconstituer exactement la série $\{I_m(k)\}$.

Si les suites de 0 et de 1 sont très morcelées, le débit d'informations auxiliaires peut être important. Pour un faible nombre de raies masquées, le gain de leur non-transmission peut-être nul, voire négatif. Il convient alors de ne pas procéder à cette non-transmission ou tout au moins de la restreindre à certaines zones fréquentielles.

Pour cela, le nombre moyen de bits par coefficients est calculé dans les 2 cas :
- transmission de tous les coefficients :

$$R_1(k) \ = \ (R_0 \ - \ R_{ifs})/(N/2)$$

où
. $R_0$ est le nombre total de bits par bloc,
. $R_{ifs}$ est le nombre de bits nécessaire à la transmission de l'information auxiliaire de description du spectre. $R_{ifs}$ est en fait la valeur au bloc précédent.
- non-transmission des raies masquées par utilisation du codage des longueurs de suite :

$$R_2(k) \ = \ (R_0 - R_{ifs} - R_{lm})(N/2 - N_{rm})$$

où
. $R_{lm}$ est le débit auxiliaire pour le codage des longueurs de suites,
. $N_{rm}$ est le nombre de raies masquées.

La non-transmission des raies masquées est effectuée pour toute la bande considérée, si le sous-module 24 de calcul du débit et de test établit que :

$$R_{lm} < N_{rm}.(2(R_0 - R_{ifs})/N)$$

Si cette condition n'est pas respectée, ce test est accompli dans 4 sous-bandes de fréquence de la bande considérée, de largeurs égales. Lors de la recherche des suites de 0 et de 1, les valeurs "locales" $R_{lm}(l)$ et $N_{rm}(l)$ ($l = 1,...,4$) sont calculées.

Si $R_{lm}(l) < N_{rm}(l).(2(R_{0-ifs}/N)$, c'est-à-dire si le gain en bits est positif pour la sous-bande l de fréquence considérée, le "Run Length Coding" est appliqué aux coefficients de cette sous-bande l.

Sinon tous les coefficients de cette bande sont considérés comme étant non masqués et l'indice du premier coefficient forcé à 0 est modifié en conséquence.

Le sous-module 25 de validation du codage pilote le sous-module 23 de codage à longueur variable, en fonction de la nécessité ou non de réaliser le codage.

Le débit auxiliaire moyen est de l'ordre de 0,8 bits par raie masquée. Cette faible valeur prouve l'intérêt de l'utilisation du codage des longueurs de suites.

La figure 3 représente le schéma fonctionnel détaillé du module 15 de calcul et de codage de l'information auxiliaire.

La transmission d'une information auxiliaire est nécessaire au calcul de l'allocation des bits et à la quantification des coefficients. Cette information auxiliaire 19 constitue en fait un descripteur plus ou moins précis du spectre du signal.

7

Dans le mode de réalisation décrit, le descripteur de spectre est calculé dans un sous-module 31 par bandes de fréquence de largeurs inégales. Le spectre est partagé par exemple en 50 groupes de fréquence.

Les limites, $b_{si}^b(j)$ et $b_{si}^h(j)$, de ces bandes respectent celles des bandes critiques. Les bandes les plus étroites ($j = 1,...,14$) ont la même largeur que les bandes critiques correspondantes. Les autres bandes ont une largeur croissante qui atteint pour la dernière ($j = 50$) 562,5 Hz (c'est-à-dire 18 coefficients).

Le descripteur de spectre utilisé $\sigma(j)$ est égal à l'écart type des raies spectrales non masquées dans chacune des bandes :

$$\sigma^2(j) = (1/N_{si}(j)) . \sum_{b_{si}^b(j)}^{b_{si}^h(j)} y^2(k)$$

avec $j = 1,...,50$

$N_{si}(j)$ est le nombre de coefficients non masqués dans la bande j.

L'originalité du codage de cette information, selon l'invention, réside dans la prise en compte de la corrélation existant entre les blocs de transformée successifs au moyen d'un codage prédictif. Ainsi, le codeur profite de toutes les corrélations du signal (à court terme et à plus long terme).

Le codage de l'information auxiliaire est habituellement effectué sans tenir compte des propriétés perceptuelles, à la différence de la quantification des coefficients. Il convient cependant de réserver le plus de bits possible au débit du signal principal 101, et donc de réduire le débit de l'information auxiliaire 19.

Un codage direct des composantes du descripteur de spectre $\sigma(m,j)$ (m numéro de bloc) réclame un débit élevé. Cependant, les signaux étant en général fortement stationnaires, le descripteur de spectre est très corrélé d'un bloc au suivant.

Le moyen le plus direct pour profiter de cette stationnarité est d'effectuer un codage prédictif 32. Du fait de la grande dynamique spectrale, il est préférable d'appliquer la prédiction à $\sigma(m,j)$ exprimé en dB. En effet, c'est plutôt le rapport $\sigma(m,j)/\sigma(m-1,j)$ qui présente un gain de prédiction élevé, que la différence $\sigma(m,j)-\sigma(m-1,j)$.

Comme représenté en figure 4, ce codage prédictif comporte un opérateur 41 de conversion sur une échelle logarithmique suivi du code MIC Différentiel et d'un dispositif 43 de codage à longueur variable.

La prédiction est réalisée par un prédicteur 44 d'ordre 1. Le coefficient de prédiction $a_1$ peut prendre une valeur entre 0,95 et 1. L'entrée de ce prédicteur 44 est la valeur quantifiée précédente $\log(\sigma'(m,j))$.

L'erreur de prédiction

$$e(m,j) = \log(\sigma(m,j)) - a_1.\log(\sigma'(m - 1,j))$$

avec $j = 1,....,50$

est quantifiée par un quantificateur uniforme 45 ayant par exemple 32 niveaux pour une dynamique de $[-2,2]$.

Puisque le signal est stationnaire sur des durées importantes, la densité de probabilité des mots de code en sortie du quantificateur 45 est très concentrée. Par conséquent, ces mots de code subissent un codage à longueur variable 43 (codage de HUFFMAN) qui permet de réduire le débit de transmission des descripteurs de spectre à environ 2,5 bits par valeur $\sigma'(m,j)$.

La valeur $\log(\sigma'(m,j))$ est obtenue par la sommation 46 de la valeur fournie par un quantificateur inverse 47, correspondant à la valeur que l'on obtiendra au décodage, et de la valeur précédente issue du prédicteur 44.

Si une bande de fréquence est entièrement masquée ($N_{si}(j) = 0$), il n'est pas nécessaire de transmettre un mot de code pour la bande j. En effet, la valeur de $\sigma(m,j)$ est dans ce cas connue au décodeur au moyen de l'information concernant les raies masquées.

Toutefois, pour éviter qu'une erreur de transmission sur les bits $l(m,k)$ se répercute sur les valeurs $\sigma'(m,j)$, une redondance est volontairement introduite dans le codage : si $N_{si} = 0$, un mot de code spécifique est transmis, calculé en fonction de ses occurrences, comme les autres modes de code.

Ainsi, lorsque la bande cesse d'être entièrement masquée, la prédiction porte sur la dernière valeur non nulle $\sigma'(m-p,j)$ transmise.

Lors des transitions spectrales (non-stationnarités du signal), cette procédure de quantification n'est plus valable car elle réclame un débit trop important pour conserver la même précision de quantification. Il est alors nécessaire de faire appel à un codage sans mémoire de $\sigma(m,j)$, mis en oeuvre dans le sous-module 34.

Ce second codage 34 est similaire au précédent. La prédiction a lieu fréquentiellement au lieu d'être effectuée sur les blocs de transformée successifs. L'erreur de prédiction est calculée par :

$$e(m,j) = \log(\sigma(m,j)) - \log(\sigma'(m,j-1))$$

$e(m,j)$ est codée par un quantificateur uniforme ayant par exemple une dynamique de 100 dB et 50 niveaux de quantification. Les mots de code en sortie subissent aussi un codage de HUFFMAN.

La première valeur $\sigma(m,1)$ est transmise séparément.

Un module 33 de choix du type de codage sélectionne le meilleur codage, d'après le nombre de bits dépensés. Si le débit nécessaire au codage inter-trames dépasse un seuil préalablement fixé, le second type de codage 34 est employé. Ce choix est transmis au décodeur à l'aide d'un bit de décision 35.

Il est également possible de tenir compte, pour la sélection du type de codage, d'un autre critère que celui de la minimisation du débit. On peut par exemple agir de façon à minimiser l'effet des erreurs de transmission.

Le prédicteur 44 de la figure 4 est un prédicteur auto-regressif d'ordre 1 (AR(1)) avec un coefficient de prédiction très proche de 1. Par conséquent, l'effet des erreurs de transmission risque de se propager indéfiniment. Puisque l'information auxiliaire a une importance majeure, entre autres pour l'allocation des bits, il est nécessaire de réinitialiser le codage inter-trames. A cet effet, pour tous les blocs de rang multiple de 16, le codage sans mémoire interblocs, est utilisé, même si le signal est stationnaire.

Les coefficients $y(k)$ 12 sont codés au moyen de quantificateurs adaptatifs non uniformes. L'adaptation est réalisée par le descripteur de spectre quantifié $\sigma'(m,j)$, où $j$ est le numéro de la bande à laquelle appartient $y(k)$.

Chaque valeur $\sigma'(m,j)$ représente un nombre variable, $N_{si}(j)$, de coefficients $y(k)$ non nuls, du fait de la largeur variable des bandes de fréquence et du dispositif de détection des raies masquées. Les performances des quantificateurs varient en fonction du nombre de coefficients à quantifier $N_{si}(j)$.

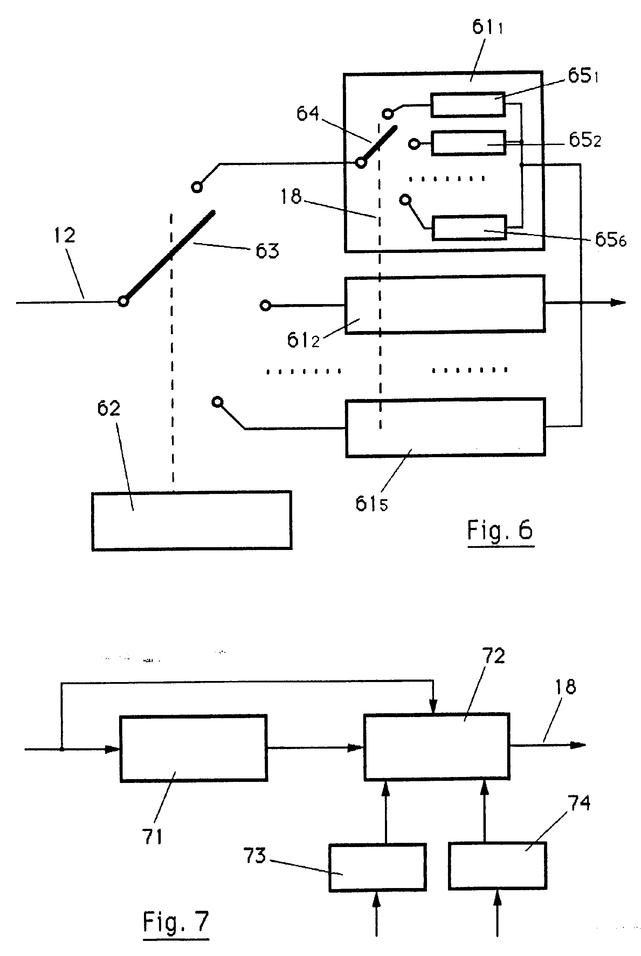

Selon l'invention, et de façon à optimiser le système de codage, plusieurs jeux de quantificateurs sont disponibles, en fonction de $N_{si}(j)$. La figure 6 présente le schéma fonctionnel du module de sélection du quantificateur à utiliser.

Par exemple, dans la configuration suivante, 5 jeux $61_1$ à $61_5$ de quantificateurs sont disponibles. Un module 62 de test sur la valeur $N_{SI(j)}$ pilote un sélecteur 63, selon les critères suivants :
- le premier pour les bandes ayant 1 coefficient non nul : $N_{si}(j) = 1$ ;
- le second jeu pour : $N_{si}(j) = 2$ ;
- le troisième jeu pour : $6 > N_{si}(j) > 2$ ;
- le quatrième jeu pour : $10 > N_{si}(j) > 5$ ;
- le cinquième jeu pour : $N_{si}(j) > 9$.

Dans chaque cas, des quantificateurs optimaux pour un nombre de bits variant par exemple entre 1 et 6 bits, ont été calculés. Un second sélecteur 64 permet de choisir, dans chaque jeu de quantificateurs $65_1$ à $65_6$, le quantificateur optimal, en fonction du nombre de bits R 18. Ainsi, l'optimisation du choix du quantificateur est réalisée en fonction du nombre de coefficients à quantifier et du nombre de bits alloués par le module d'allocation de bits.

La figure 7 présente le dispositif d'allocation des bits à chaque bande selon l'invention.

L'allocation des bits est conçue pour accomplir la mise en forme spectrale du bruit de quantification d'après des critères perceptuels. Elle minimise le rapport bruit/seuil de masquage. Cette procédure est effectuée au codeur et au décodeur et est basée sur le descripteur de spectre préalablement transmis.

L'allocation des bits comporte un module 71 de calcul du seuil de masquage $S(k)$ - calcul similaire à celui effectué pour la détection des raies masquées - et un module 72 de quantification du rapport $\alpha(k).\beta(k).\sigma^2(k)/S(k)$ comparable à celui décrit par Yannick MAHIEUX dans l'article "Transform Coding of Audio Signals Using Correlation between successive Transform Blocks" (Codage par transformation de signaux audio utilisant la corrélation entre les blocs transformés successifs) (Actes du congrès ICASSP, 1989, Glasgow).

$\sigma^2(k)$ est le carré du descripteur de spectre, étendu à tous les coefficients $y(k)$ de la bande. Il s'agit de l'élément essentiel du rapport à quantifier. Puisque les coefficients sont codés avec des jeux de quantificateurs différents (selon $N_{si}(j)$), il est nécessaire d'inclure les performances relatives de chaque jeu de quantificateurs dans l'allocation des bits, d'après l'ouvrage de JAYANT et NOLL : "Digital Coding of Waveforms" (Codage numérique de formes d'onde) (1984 ; Prentice Hall Signal Processing Series).

La fonction $\alpha(k)$ est égale au facteur de performance du quantificateur à utiliser pour le coefficient $y(k)$. Une table 73 comporte par exemple 5 valeurs de $\alpha(k)$ calculées préalablement. Cette table est adressée par le nombre de coefficients non nuls. La prise en compte des performances réelles des jeux de quantificateurs permet une amélioration très sensible de la qualité du codage.

Le module 74 de calcul de la fonction $\beta(k)$ tient compte quant à elle de la fonction d'étalement spectral $\gamma$, également d'après JAYANT et NOLL. Cette fonction indique si le spectre est concentré ou non et est calculée au codeur par:

$$\gamma = (1/N). \quad \overset{N-1}{\underset{k=0}{\Sigma}} \quad 10.\log_{10}(y^2(k)) - 10.\log_{10}((1/N) \quad \overset{N-1}{\underset{k=0}{\Sigma}} y^2(k))$$

Pour l'allocation des bits, $\gamma$ est calculé dans 4 bandes de fréquence de largeur égales. Ces 4 valeurs sont transmises au décodeur à l'aide d'une quantification uniforme sur 6 bits.

Dans chacune de ces 4 bandes de fréquence, la fonction $\beta(k)$ est calculée d'après la valeur de $\gamma$ par l'intermédiaire d'une fonction non linéaire. Le rôle de $\beta(k)$ est de forcer l'allocation des bits à accorder un nombre de bits plus important aus zones du spectre qui contiennent des pics. En effet, les coefficients $y(k)$ correspondant aux sons purs contenus dans le signal doivent être codés avec une meilleure précision, le seuil de masquage ayant alors un niveau par rapport à celui du signal, plus faible que dans le cas d'un spectre de bruit.

La détection explicite des composantes spectrales inaudibles, ainsi que l'utilisation de la corrélation interblocs, permettent de réduire le débit d'un signal haute qualité, de fréquence d'échantillonnage d'origine supérieure à 32 kHz, à une valeur voisine de 64 kbits/s tout en conservant, d'un point de vue résultat auditif, la qualité du signal de départ.

**Revendications**

1.  Dispositif de compression d'un signal audionumérique (10) destiné à être transmis à travers un canal à débit limité et/ou stocké sur un support d'informations numériques, comprenant :
    - des moyens (11) de transformation dudit signal audionumérique (10) en un signal numérique transformé (12) comprenant une pluralité de composantes spectrales réparties dans un jeu de bandes de fréquence adjacentes couvrant la totalité du spectre du signal transformé ;
    - des moyens (17) de quantification desdites composantes spectrales, délivrant un signal principal ;
    - des moyens (15) de détermination d'une description (19) du spectre dudit signal transformé (12), formant un premier signal auxiliaire ; et
    - des moyens (16) d'allocation de bits contrôlant lesdits moyens (17) de quantification, en affectant à chacune desdites bandes de fréquence un nombre (18) de bits spécifiques pour la quantification des composantes spectrales de ladite bande de fréquence, à partir notamment d'une analyse psycho-auditive (71) de ladite description du spectre,
    caractérisé en ce qu'il comprend de plus des moyens (14) d'élimination préalable de composantes spectrales dudit signal transformé en fonction d'un critère psycho-auditif, délivrant un second signal auxiliaire représentatif des composantes spectrales éliminées, respectivement conservées,
    ledit second signal auxiliaire informant lesdits moyens (16) d'allocation de bits de façon que ledit nombre (18) de bits tienne compte du nombre de composantes spectrales conservées dans chacune desdites bandes de fréquence pour optimiser ladite allocation de bits,
    lesdits premier et second signal auxiliaire étant transmis et/ou stockés conjointement audit signal principal, de façon à en permettre la décompression.

2.  Dispositif selon la revendication 1, caractérisé en ce que ledit second élément de signal auxiliaire est codé à l'aide de moyens (22, 23) de codage de longueur de suites codant les indices desdites composantes spectrales masquées, respectivement conservées, une première valeur binaire étant affectée aux composantes spectrales masquées et une seconde valeur binaire étant affectée aux composantes spectrales conservées.

3.  Dispositif selon l'une quelconque des revendications 1 et 2, caractérisé en ce que (de façon connue) il comporte des moyens (21) de calcul du seuil de masquage de composantes spectrales sur critère psycho-auditif, pour l'optimisation de l'allocation (16 ; 72) des bits dans chacune desdites bandes.

4.  Dispositif selon l'une quelconque des revendications 1 à 3, caractérisé en ce que ledit critère psycho-auditif fonctionne selon le critère de masquage psycho-auditif de ZWICKER.

5.  Dispositif selon l'une quelconque des revendications 1 à 4, caractérisé en ce que lesdits moyens (17 ;

61$_1$ à 61$_6$) de quantification comportent au moins deux quantificateurs (61$_1$ à 61$_6$) distincts et des moyens (63) d'affectation sélective de l'un desdits quantificateurs à chacune desdites bandes du spectre dudit signal transformé en fonction dudit second signal auxiliaire indiquant le nombre de composantes conservées dans ladite bande, après ladite élimination des coefficients masqués.

6. Dispositif selon l'une quelconque des revendications 1 à 5 caractérisé en ce qu'il comprend des moyens (72) de minimisation d'un rapport bruit de quantification/seuil de masquage dans chacune desdites bandes.

7. Dispositif selon la revendication 6 caractérisé en ce que ledit bruit de quantification est déterminé en fonction d'au moins une des trois informations appartenant au groupe comprenant :
   - l'écart-type desdites composantes spectrales non éliminées dans ladite bande ;
   - un facteur de performance dudit quantificateur sélectionné pour ladite bande ;
   - une information d'étalement spectral de ladite bande.

8. Dispositif selon la revendication 2, caractérisé en ce que lesdits moyens (23) de codage des longueurs de suites utilisent un code à longueur variable du type des codes de HUFFMAN.

9. Dispositif selon l'une quelconque des revendications 2 et 8, caractérisé en ce que lesdits moyens (23) de codage des longueurs de suites délivrent un mot de code spécifique pour le codage des bandes de fréquence dont toutes lesdites composantes sont éliminées.

10. Dispositif selon l'une quelconque des revendications 2, 8 et 9, caractérisé en ce que lesdits moyens (23) de codage des longueurs de suites sont activées par des moyens (25) de sélection, en fonction d'une information de gain de débit apporté par ledit codage.

11. Dispositif selon l'une quelconque des revendications 1 à 10, caractérisé en ce qu'il coopère avec des moyens (15 ; 32,34) de codage dudit premier signal auxiliaire correspondant à la description du spectre.

12. Dispositif selon la revendication 11, caractérisé en ce que lesdits moyens (15) de codage comprennent des moyens (32) de codage prédictif.

13. Dispositif selon la revendication 12, caractérisé en ce que lesdits moyens (32) de codage prédictif comprennent des moyens appartenant au groupe comprenant les moyens (41) de conversion logarithmique, les moyens (44) de codage MIC différentiel, et les moyens (43) de codage par code à longueur variable, du type des codes de HUFFMAN.

14. Dispositif selon l'une quelconque des revendications 12 et 13, caractérisé en ce que lesdits moyens (15) de codage comprennent également des moyens (34) de codage sans mémoire interblocs, lesdits moyens (32) de codage prédictif et lesdits moyens (34) de codage sans mémoire étant sélectionnés selon un critère prédéterminé.

15. Dispositif selon la revendication 14 caractérisé en ce que ledit critère prédéterminé est un critère de moindre débit et/ou un critère de minimisation de l'effet des erreurs de transmission.

16. Dispositif selon l'une quelconque des revendications 1 à 15 caractérisé en ce qu'au moins une des informations appartenant au groupe comprenant ladite information auxiliaire (19) correspondant à la description du spectre, ladite information fournie par lesdits moyens d'élimination des composantes inaudibles et une information d'étalement spectral, est transmise ou stockée conjointement à chacun des blocs d'information principale.

17. Dispositif selon l'une quelconque des revendications 1 à 16, caractérisé en ce que ledit signal numérique transformé (12) est élaboré par des moyens (11) de codage par transformation utilisant une transformée du type de la transformée en cosinus discrète modifiée de PRINCEN et BRADLEY.

18. Dispositif selon la revendication 17, caractérisé en ce que lesdits moyens (11) de codage par transformation comportent des moyens de fenêtrage adouci du signal temporel faisant apparaître une symétrie dans ledit signal transformé.

19. Dispositif selon la revendication 18, caractérisé en ce que lesdits moyens de fenêtrage utilisent une fe-

nêtre définie par :

$$F(n) = \sqrt{2}.\sin(\pi(n + 0,5)/N) \qquad n = 0,....,N - 1$$

où N est le nombre d'échantillons de ladite fenêtre.

## Claims

1. Device for compression of a digital audio signal (10) intended to be transmitted through a channel with limited bit rate and/or stored on a digital information medium, comprising:
   - means (11) for transforming the said digital audio signal (10) into a transformed digital signal (12) comprising a plurality of spectral components dispersed among a set of adjacent frequency bands covering the totality of the spectrum of the transformed signal;
   - means (17) for quantizing the said spectral components, delivering a main signal;
   - means (15) for determining a description (19) of the spectrum of the said transformed signal (12), forming a first auxiliary signal; and
   - means (16) for allocating bits controlling the said quantizing means (17) by assigning to each of the said frequency bands a number (18) of specific bits for quantizing the spectral components of the said frequency band, based in particular on a psychoauditive analysis (71) of the said description of the spectrum,

   characterized in that it furthermore comprises means (14) for prior elimination of spectral components of the said transformed signal as a function of a psychoauditive criterion, delivering a second auxiliary signal representative of the eliminated, respectively preserved spectral components,
   the said second auxiliary signal advising the said bit allocation means (16) so that the said number (18) of bits takes account of the number of spectral components preserved in each of the said frequency bands so as to optimize the said bit allocation,
   the said first and second auxiliary signals being transmitted and/or stored jointly with the said main signal, so as to allow decompression thereof.

2. Device according to Claim 1, characterized in that the said second auxiliary signal is coded with the aid of run length coding means (22, 23) coding the indices of the said masked, respectively preserved spectral components, a first binary value being assigned to the masked spectral components and a second binary value being assigned to the preserved spectral components.

3. Device according to either one of Claims 1 and 2, characterized in that (in a known manner) it includes means (21) for computing the masking threshold for the spectral components on the basis of a psychoauditive criterion, for optimization of the allocation (16; 72) of the bits in each of the said bands.

4. Device according to any one of Claims 1 to 3, characterized in that the said psychoauditive criterion works according to Zwicker's psychoauditive masking criterion.

5. Device according to any one of Claims 1 to 4, characterized in that the said quantizing means $(17; 61_1$ to $61_6)$ include at least two distinct quantizers $(61_1$ to $61_6)$ and means (63) for selectively assigning one of the said quantizers to each of the said bands of the spectrum of the said transformed signal as a function of the said second auxiliary signal indicating the number of components preserved in the said band, after the said elimination of the masked coefficients.

6. Device according to any one of Claims 1 to 5, characterized in that it comprises means (72) for minimizing a quantization noise/masking threshold ratio in each of the said bands.

7. Device according to Claim 6, characterized in that the said quantization noise is determined as a function of at least one of the three pieces of information belonging to the group comprising:
   - the standard deviation of the said spectral components not eliminated from the said band;
   - a performance factor for the said selected quantizer for the said band;
   - a piece of information on the spectral spread of the said band.

8. Device according to Claim 2, characterized in that the said run length coding means (23) use a variable-length code of the Huffman codes type.

9. Device according to either one of Claims 2 and 8, characterized in that the said run length coding means (23) deliver a specific code word for coding the frequency bands all the said components of which are eliminated.

**10.** Device according to any one of Claims 2, 8 and 9, characterized in that the said run length coding means (23) are activated by selection means (25) as a function of a piece of information on bit rate gain provided by the said coding.

**11.** Device according to any one of Claims 1 to 10, characterized in that it cooperates with means (15; 32, 34) for coding the said first auxiliary signal corresponding to the description of the spectrum.

**12.** Device according to Claim 11, characterized in that the said means (15) for coding comprise predictive coding means (32).

**13.** Device according to Claim 12, characterized in that the said predictive coding means (32) comprise means belonging to the group comprising logarithmic conversion means (41), differential PCM coding means (44), and means (43) for coding by variable-length code, of the Huffman codes type.

**14.** Device according to either one of Claims 12 and 13, characterized in that the said coding means (15) also comprise means (34) for coding without inter-block memory, the said predictive coding means (32) and the said coding means without memory (34) being selected according to a predetermined criterion.

**15.** Device according to Claim 14, characterized in that the said predetermined criterion is a least bit rate criterion and/or a criterion for minimizing the effect of transmission errors.

**16.** Device according to any one of Claims 1 to 15, characterized in that at least one of the pieces of information belonging to the group comprising the said auxiliary information (19) corresponding to the description of the spectrum, the said information given by the said means for eliminating the inaudible components and a piece of information on spectral spread, is transmitted or stored jointly with each of the main information blocks.

**17.** Device according to any one of Claims 1 to 16, characterized in that the said transformed digital signal (12) is prepared by means (11) for coding by transformation using a transform of the Princen and Bradley modified discrete cosine transform type.

**18.** Device according to Claim 17, characterized in that the said means (11) for coding by transformation include means of tapered windowing of the temporal signal bringing out a symmetry in the said transformed signal.

**19.** Device according to Claim 18, characterized in that the said windowing means use a window defined by:
$$F(n) = \sqrt{2}.\sin(\pi(n + 0.5)/N) \qquad n = 0,....,N - 1$$
where N is the number of samples of the said window.


## Patentansprüche

**1.** Verfahren für die Kompression eines audiodigitalen Signals (10), das über einen Kanal mit begrenztem Durchsatz gesendet und/oder auf einem digitalen Datenträger gespeichert werden soll, welches folgendes umfaßt:
   - Mittel (11) zum Umwandeln des audiodigitalen Signals (10) in ein umgewandeltes digitales Signal (12), das eine Vielfalt von Spektralkomponenten enthält, die über einem Satz nebeneinanderliegender Frequenzbänder verteilt sind, welche das gesamte Spektrum des umgewandelten Signals abdecken;
   - Quantifizierungsmittel (17) der Spektralkomponenten, die ein Hauptsignal ergeben;
   - Mittel (15) zur Feststellung einer Beschreibung (19) des Spektrums des umgewandelten Signals (12), die ein erstes Hilfssignal bilden; und
   - Mittel (16) für die Zuordnung von Bits, die die Quantifizierungsmittel (127) dadurch steuern, daß sie jedem der Frequenzbänder eine Zahl (18) spezifischer Bits für die Quantifizierung der Spektralkomponenten des Frequenzbandes zuordnen, insbesondere ausgehend von einer psycho-auditiven Analyse (71) der Beschreibung des Spektrums,

dadurch gekennzeichnet, daß es zusätzlich über Mittel (14) zur vorherigen Eliminierung von Spektralkomponenten des umgewandelten Signals in Abhängigkeit eines psycho-auditiven Kriteriums verfügt, welches ein zweites Hilfssignal erzeugt, das repräsentativ für die eliminierten Spektralkomponenten ist, die entsprechend gespeichert wurden,

wobei das zweite Hilfssignal die Bitzuordnungsmittel (16) derart informiert, daß die Zahl (18) von Bits die Zahl der Spektralkomponenten berücksichtigt, die in jedem der Frequenzbänder gespeichert wird, um die Bitzuordnung zu optimieren,

wobei das erste und zweite Hilfssignal zusammen mit dem Hauptsignal gesendet und/oder gespeichert wird, um dessen Dekompression zu ermöglichen.

2. Verfahren gemäß Anspruch 1,
dadurch gekennzeichnet, daß das zweite Hilfssignal durch Kodierungsmittel (22, 23) für die Länge der Folgen kodiert wird, welche die Indizes der maskierten Spektralkomponenten kodieren, die entsprechend gespeichert sind, wobei ein erster Binärwert den gespeicherten Spektralkomponenten zugeordnet wird.

3. Verfahren gemäß irgendeinem der Ansprüche 1 und 2,
dadurch gekennzeichnet, daß es (in bekannter Weise) über Mittel (21) zur Berechnung der Maskierungsschwelle von Spektralkomponenten gemäß eines psycho-auditiven Kriteriums enthält, um die Zuordnung (16; 72) der Bits in jedem der Bänder zu optimieren.

4. Verfahren gemäß irgendeinem der Ansprüche 1 bis 3,
dadurch gekennzeichnet, daß das psycho-auditive Kriterium gemäß dem psycho-auditiven Maskierungskriterium nach ZWICKER funktioniert.

5. Verfahren gemäß irgendeinem der Ansprüche 1 bis 4,
dadurch gekennzeichnet, daß die Quantifizierungsmittel ($17, 61_1$ bis $61_6$) mindestens zwei verschiedene Quantifikatoren ($61_1$ bis $61_6$) umfassen, sowie Mittel (63) zur selektiven Zuordnung eines der Quantifikatoren zu jedem der Spektralbänder des umgewandelten Signals als Funktion des zweiten Hilfssignals, das die Zahl der im Band gespeicherten Komponenten nach der Eliminierung der maskierten Koeffizienten angibt.

6. Verfahren gemäß irgendeinem der Ansprüche 1 bis 5,
dadurch gekennzeichnet, daß es über Mittel (72) zur Minimierung eines Verhältnisses Quantifizierungsrauschen/Maskierungsschwelle in jedem der Bänder verfügt.

7. Verfahren gemäß Anspruch 6,
dadurch gekennzeichnet, daß das Quantifizierungsrauschen als Funktion von mindestens einer der drei Informationen festgestellt wird, die der Gruppe angehören, welche folgendes umfaßt:
   - der typische Abstand der Spektralkomponenten, die im Band nicht eliminiert wurden;
   - einen Leistungsfaktor des für das Band ausgewählten Quantifikators;
   - eine Information für die spektrale Ausbreitung des Bandes.

8. Verfahren gemäß Anspruch 2,
dadurch gekennzeichnet, daß die Mittel (23) für die Kodierung der Sequenzlängen einen Code variabler Länge vom Typ des HUFFMAN Codes anwenden.

9. Verfahren gemäß einem der Ansprüche 2 und 8,
dadurch gekennzeichnet, daß die Mittel (23) für die Kodierung der Sequenzlängen ein für das Kodieren der Frequenzbänder spezifisches Codewort erzeugen, für welche alle die Komponenten eliminiert wurden.

10. Verfahren gemäß irgendeinem der Ansprüche 2, 8 und 9,
dadurch gekennzeichnet, daß die Mittel (23) zum Kodieren der Sequenzlängen durch Auswahlmittel (25) aktiviert werden, als Funktion einer Durchsatzerhöhungsinformation, welche durch die Kodierung erbracht wird.

11. Verfahren gemäß irgendeinem der Ansprüche 1 bis 10,
dadurch gekennzeichnet, daß es mit Kodierungsmitteln (15; 32, 34) des ersten Hilfssignals zusammenarbeitet, das der Spektrumbeschreibung entspricht.

12. Verfahren gemäß Anspruch 11,
dadurch gekennzeichnet, daß die Kodierungsmittel (15) über Mittel (32) für die vorhersagende Kodierung verfügen.

13. Verfahren gemäß Anspruch 12,
dadurch gekennzeichnet, daß die vorhersagenden Kodierungsmittel (32) Mittel umfassen, die der Gruppe angehören, welche die Mittel (41) zur logarithmischen Konversion, die Mittel (44) zur differentiellen MIC-Kodierung und die Kodierungsmittel (43) über Codes variabler Länge vom Typ der HUFFMAN-Codes umfassen.

14. Verfahren gemäß irgendeinem der Ansprüche 12 und 13,
dadurch gekennzeichnet, daß die Kodierungsmittel (15) auch Mittel (34) zur Kodierung ohne Interblock-Speicher umfassen, wobei die vorhersagenden Kodierungsmittel (32) und die speicherlosen Kodierungsmittel (34) gemäß eines vorher festgelegten Kriteriums ausgewählt werden.

15. Verfahren nach Anspruch 14,
dadurch gekennzeichnet, daß das vorgegebene Kriterium ein Kriterium für geringen Durchsatz und/oder ein Kriterium zur Minimierung des Übertragungsfehlers ist.

16. Verfahren gemäß irgendeinem der Ansprüche 1 bis 15,
dadurch gekennzeichnet, daß mindestens eine der Informationen, die der Gruppe angehören, welche die, der Beschreibung des Spektrums entsprechenden Hilfsinformation (19), die Information, die von den Mitteln zur Eliminierung nicht hörbarer Komponenten erzeugt werden und eine Information zur Spektralausbreitung umfaßt, zusammen mit jedem der Hauptinformationsblöcke übertragen oder gespeichert wird.

17. Verfahren gemäß irgendeinem der Ansprüche 1 bis 16,
dadurch gekennzeichnet, daß das umgewandelte Digitalsignal (12) durch Mittel (11) zur Kodierung durch Umwandlung erzeugt wird, die eine Transformierte vom Typ der geänderten diskreten Cosinustransformierten nach PRINCEN und BRADLEY anwenden.

18. Verfahren gemäß Anspruch 17,
dadurch gekennzeichnet, daß die Transformationskodierungsmittel (11) über abgeschwächte Fensteranordnungsmittel des zeitlichen Signals verfügen, welches eine Symmetrie im transformierten Signal erscheinen läßt.

19. Verfahren gemäß Anspruch 18,
dadurch gekennzeichnet, daß die Fensteranordnungsmittel ein Fenster anwenden, das durch:
$$F(n) = \sqrt{2}\sin(\pi(n + 0{,}5)/N) \qquad n = 0,...,N - 1$$
definiert ist, wobei N die Zahl der Spalten des Fensters ist.

Fig. 1

Fig. 2

Fig. 3

Fig. 4

Fig. 5

Fig. 6

Fig. 7